(19) Europäisches Patentamt
European Patent Office
Office européen des brevets

(11) **EP 3 793 052 A1**

(12) **EUROPÄISCHE PATENTANMELDUNG**

(43) Veröffentlichungstag:
**17.03.2021 Patentblatt 2021/11**

(21) Anmeldenummer: **19196974.0**

(22) Anmeldetag: **12.09.2019**

(51) Int Cl.:
$H02J\ 3/32^{(2006.01)}$       $H02J\ 3/38^{(2006.01)}$
$H02J\ 3/48^{(2006.01)}$       $H02J\ 7/00^{(2006.01)}$
$H02J\ 7/34^{(2006.01)}$       $H02J\ 9/00^{(2006.01)}$
$A61B\ 5/05^{(2021.01)}$

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Jungnickel, Frank**
**91094 Bräuningshof / Langensendelbach (DE)**

(54) **VERFAHREN ZUM BETREIBEN EINES DEZENTRALEN VERSORGUNGSNETZES IN ABHÄNGIGKEIT EINER KENNLINIE, NETZSTEUERUNGSSYSTEM, COMPUTERPROGRAMM SOWIE ELEKTRONISCH LESBARER DATENTRÄGER**

(57) Die Erfindung betrifft ein Verfahren zum Betreiben eines dezentralen Versorgungsnetzes (10) mittels eines Netzsteuerungssystems (12), bei welchem das dezentrale Versorgungsnetz (10) zumindest mit einer dezentralen Energieerzeugungseinrichtung (16), einem elektrischen Verbraucher (18), einer elektrischen Energiespeichereinrichtung (20) und einer elektrischen Energieverteilereinrichtung (22), bereitgestellt wird, wobei zumindest eine erste Netzumrichtereinrichtung (24) der elektrischen Energiespeichereinrichtung (20) in Abhängigkeit von einer Spannung innerhalb der Energieverteilereinrichtung (22) kennliniengesteuert wird, wobei die erste Netzumrichtereinrichtung (24) zusätzlich in Abhängigkeit von einem aktuellen Ladezustand (SOC) der elektrischen Energiespeichereinrichtung (20) kennliniengesteuert wird, so dass zusätzlich ladezustandsabhängig elektrische Leistung von der elektrischen Energiespeichereinrichtung (20) für die Energieverteilereinrichtung (22) bereitgestellt wird oder die elektrische Energiespeichereinrichtung (20) mit elektrischer Leistung der Energieverteilereinrichtung (22) geladen wird. Ferner betrifft die Erfindung ein Netzsteuerungssystem (12), ein Computerprogramm sowie einen elektronisch lesbaren Datenträger.

FIG 1

EP 3 793 052 A1

**Beschreibung**

Die Erfindung betrifft ein Verfahren zum Betreiben eines dezentralen Versorgungsnetzes mittels eines Netzsteuerungssystems, bei welchem das dezentrale Versorgungsnetz zumindest mit einer dezentralen Energieerzeugungseinrichtung, einem elektrischen Verbraucher, einer elektrischen Energiespeichereinrichtung und einer elektrischen Energieverteilereinrichtung, an welcher die dezentrale Energieerzeugungseinrichtung und die elektrische Energiespeichereinrichtung und der elektrische Verbraucher elektrisch gekoppelt sind, bereitgestellt wird, wobei zumindest eine erste Netzumrichtereinrichtung der elektrischen Energiespeichereinrichtung in Abhängigkeit von einer Spannung innerhalb der Energieverteilereinrichtung kennliniengesteuert wird, so dass in Abhängigkeit einer Kennlinie elektrische Leistung von dem elektrischen Energiespeicher für die Energieverteilereinrichtung bereitgestellt wird oder die elektrische Energiespeichereinrichtung mit elektrischer Leistung der Energieverteilereinrichtung geladen wird. Ferner betrifft die Erfindung ein Netzsteuerungssystem, ein Computerprogramm sowie einen elektronisch lesbaren Datenträger.

Industrieanlagen mit einem zentralen Gleichstrombus bestehen aus elektrischer Sicht in der Regel aus jeweils einem oder mehreren Netzumrichtern zur Versorgung aus dem übergeordneten AC- oder DC-Netz, also beispielsweise einem öffentlichen Netz, beispielsweise Active Front End / AFE oder DC-DC-Steller, regenerativen Quellen, beispielsweise Photovoltaik oder Windkraft, elektrischen Energiespeichereinrichtungen (Speicher), beispielsweise Batterie, Schwungradspeicher und Verbrauchern, beispielswiese Motoren, Roboter oder Schweißeinrichtungen. Quellen, Speicher und Verbraucher unterschiedlicher Hersteller sind dabei über Wechselrichter, beispielsweise für Asynchronmotoren oder DC-DC-Steller, beispielsweise für Batterien, an den DC-Bus, welcher auch als elektrische Energieverteilereinrichtung bezeichnet werden kann, angeschlossen.

Grundsätzlich können fast alle Komponenten elektrische Leistung in das lokale Anlagennetz einspeisen oder Leistung aus dem lokalen DC-Netz beziehen. Ziel einer energieeffizienten Leistungsflussregelung ist es, das Netz so zu betreiben, dass die überwiegend oder vollständig als Verbraucher wirksamen Anlagenteile nicht unmittelbar aus dem übergeordneten Netz, sondern direkt aus den verfügbaren Leistungen der regenerativen Quellen beziehungsweise der Speicher im lokalen Netz gespeist werden. Über die weitgehend lokale Nutzung der Energiegewinnung aus dezentralen Quellen wird vermieden, dass unnötige Kosten aus dem Bezug von Energie aus übergeordneten Netzen und zusätzliche Transmissionsverluste durch mehrfache Ein- beziehungsweise Rückspeisung aus dem / in das übergeordnete Netz entstehen.

Da die Leistungen der regenerativen Quellen entsprechend der Wettersituation schwanken und gegebenenfalls nicht ausreichen, um die Verbraucher zu versorgen, bedarf es eines geeigneten Verfahrens, mit dem einerseits der Bezug elektrischer Energie aus dem übergeordneten Netz minimiert wird und andererseits verhindert wird, dass sich die Speicher über- oder entladen. Der Algorithmus muss also sowohl die aktuellen Leistungsflüsse im Netz als auch die Ladezustände der beteiligten Speicher berücksichtigen.

Es sind zwei Verfahren bekannt, mit denen der Leistungsfluss in industriellen Netzen beeinflusst werden kann.

Das Konzept des Local Grid Controllers, bei welchem zusätzlich zur SPS (Speicherprogrammierbare Steuerung) für die Produktionsabläufe der Industrieanlage eine zweite SPS (Local Grid Controller / LGC) installiert wird, die sich ausschließlich mit der Echtzeiterfassung der Leistungsflüsse der Komponenten und mit deren externer Steuerung befasst. Die SPS ist jeweils mit den vorgeschalteten Umrichtern verbunden, von denen sie die aktuellen Leistungsdaten ausliest und an die sie Referenzsignale für die Leistungsregelung zurückgibt.

Intern vergibt der LGC für jede Komponente Prioritäten, nach denen der Leistungsfluss gesteuert wird. Der Referenzwert für die Leistungsabgabe von Komponenten mit geringster Priorität wird bereits bei geringen temporären Abweichungen von der ausgeglichenen Leistungsbilanz des Systems angepasst, während die Vorgaben für Komponenten mit höherer Priorität nur bei größeren Abweichungen, wie etwa bei Schweißprozessen, Kurzschlüssen oder Ausfall des übergeordneten Netzes, verändert werden.

Bei dieser Methode wird wegen der hohen Auslastung durch die Echtzeiterfassung im Bereich von einigen Millisekunden stets eine zweite leistungsfähige SPS benötigt. Änderungen der Abläufe in der Anlage erfordern eine Anpassung der Prioritätsliste und gegebenenfalls eine Rückkopplung zur SPS der Produktionssteuerung.

Die zweite bekannte Methode ist das dezentrale Netzmanagement über komponentenspezifische I(U)- bzw. P(U)-Regelkennlinien, welche auch als Droop-Curve-Control bezeichnet werden kann.

Die Spannungsregler der Netzumrichter, insbesondere des übergeordneten Netzes, beziehungsweise die üblicherweise konstanten Leistungs-Referenzwerte der Komponentenumrichter werden durch komponentenspezifische $I_{set}(V_{dc})$- beziehungsweise $P_{set}(V_{dc})$-Regelkennlinien ergänzt beziehungsweise ersetzt. Damit ändert sich die Regelvorgabe automatisch in Abhängigkeit von der am gemeinsamen DC-Bus gemessenen Spannung $V_{dc}$, die bei temporären Belastungen erheblich von der Nennspannung des Netzes abweichen kann. Diese dezentrale Vorgehensweise kann durch eine zentrale Abstimmung ergänzt werden, die einzelne Messgrößen an den Komponenten erfasst und den Verlauf der Kennlinie in Abhängigkeit von der aktuellen Belastungssituation, ähnlich wie bei den oben erwähnten Prioritätslisten, verändern kann.

Es ist jedoch kein Verfahren bekannt, dass bei diesen Bedingungen automatisch eine ausschließlich lokale Nutzung der lokal erzeugten Energie beziehungsweise der lokal erzeugten elektrischen Leistung ermöglicht.

Aufgabe der vorliegenden Erfindung ist es, ein Verfahren, ein Netzsteuerungssystem, ein Computerprogramm sowie einen elektronisch lesbaren Datenträger zu schaffen, mittels welchen ein verbesserter Betrieb eines dezentralen Versorgungsnetzes realisiert werden kann.

Diese Aufgabe wird durch ein Verfahren, ein Netzsteuerungssystem, ein Computerprogramm sowie durch einen elektronisch lesbaren Datenträger gemäß den unabhängigen Patentansprüchen gelöst. Vorteilhafte Ausgestaltungsformen sind in den unabhängigen Ansprüchen angegeben.

Ein Aspekt der Erfindung betrifft ein Verfahren zum Betreiben eines dezentralen Versorgungsnetzes mittels eines Netzsteuerungssystems, bei welchem das dezentrale Versorgungsnetz zumindest mit einer dezentralen Energieerzeugungseinrichtung, einem elektrischen Verbraucher, einer elektrischen Energiespeichereinrichtung und einer elektrischen Energieverteilereinrichtung, an welcher die dezentrale Energieerzeugungseinrichtung und die elektrische Energiespeichereinrichtung und der elektrische Verbraucher elektrisch gekoppelt sind, bereitgestellt wird, wobei zumindest eine erste Netzumrichtereinrichtung der elektrischen Energiespeichereinrichtung in Abhängigkeit von einer Spannung innerhalb der Energieverteilereinrichtung kennliniengesteuert wird, so dass in Abhängigkeit einer Kennlinie elektrische Leistung von dem elektrischen Energiespeicher für die Energieverteilereinrichtung bereitgestellt wird oder die elektrische Energiespeichereinrichtung mit elektrischer Leistung der Energieverteilereinrichtung geladen wird.

Es ist vorgesehen, dass die erste Netzumrichtereinrichtung zusätzlich in Abhängigkeit von einem aktuellen Ladezustand der elektrischen Energiespeichereinrichtung kennliniengesteuert wird, so dass zusätzlich ladezustandsabhängig elektrische Leistung von dem elektrischen Energiespeicher für die Energieverteilereinrichtung bereitgestellt wird oder die elektrische Energiespeichereinrichtung mit elektrischer Leistung der Energieverteilereinrichtung geladen wird.

Dadurch ist ein verbesserter Betrieb des dezentralen Versorgungsnetzes realisiert. Insbesondere ist es dadurch ermöglicht, dass gegenüber dem Stand der Technik ein Betrieb des dezentralen Versorgungsnetzes ermöglicht ist, ohne Leistung aus einem übergeordneten Netz beziehen zu müssen. Insbesondere wird dabei die Differenz zwischen erzeugter Leistung und dem Verbrauch im Normalbetrieb des dezentralen Versorgungsnetzes stets von der elektrischen Energiespeichereinrichtung geliefert oder zu deren Nachladen genutzt. Damit verbleibt insbesondere alle lokal erzeugte Leistung im dezentralen Versorgungsnetz. Dadurch kann eine Erhöhung der Effizienz und Senkung der Verbrauchskosten realisiert werden. Insbesondere kann dadurch realisiert werden, dass sich die elektrische Energiespeichereinrichtung im Normalbetrieb automatisch nachlädt, sodass immer genügend Leistung für außergewöhnliche Belastungen zur Verfügung steht.

Unter Normalbetrieb kann beispielsweise der Betrieb des Netzes mit mindestens einem Verbraucher, zum Beispiel einem Roboter, dessen mittlere Leistung nur um einige kW um einen Mittelwert von einigen kW schwankt, angesehen werden. Als außergewöhnliche temporäre Belastung kann der Betrieb des Netzes mit einem zusätzlichen Verbraucher, z.B. einem Punktschweißgerät, angesehen werden, das über einen vergleichsweise geringen Zeitraum, z.B. von 150 Millisekunden, eine sehr hohe Leistung von z.B. 550kW abfordert.

Insbesondere beschreibt die Kennlinie nach dem dargestellten Verfahren die Abhängigkeit des Leistungsreferenzwertes an der Netzumrichtereinrichtung des Speichers von der Spannung an der Energieverteileinrichtung, wobei sie sich in Abhängigkeit von einer Leistungsmessung der Verbraucher im Normalbetrieb, der Messung des aktuellen Leistungseintrags der regenerativen Quellen und vom Ladezustand des Speichers verändert.

Ferner kann gegenüber dem Stand der Technik realisiert werden, dass das Netzsteuerungssystem mit einfachen Schaltungen, insbesondere mit einer einfachen elektronischen Recheneinrichtung realisiert werden kann, ohne dabei eine zusätzlich SPS einsetzen oder die SPS zur Produktionssteuerung kontaktieren zu müssen. Insbesondere hat dies den Hintergrund darin, dass die Steuerung eines optimalen Leistungsflusses bei der erfindungsgemäßen Methode nur die Implementierung der Kennlinie, die Erfassung der Leistungsdaten am Verbraucher im Normalbetrieb und an den regenerativen Quellen sowie der Implementierung des Algorithmus im Netzmanagement, insbesondere innerhalb einer elektronischen Recheneinrichtung des Netzsteuerungssystems, erfordert.

Bevorzugt kann vorgesehen sein, dass das dezentrale Versorgungsnetz eine Vielzahl von elektrischen Energiespeichereinrichtungen, eine Vielzahl von dezentralen Erzeugungseinrichtungen und eine Vielzahl von elektrischen Verbrauchern aufweist. Insbesondere können die jeweiligen Elemente dann mit jeweiligen Netzumrichtereinrichtungen bereitgestellt werden, wobei insbesondere die Netzumrichtereinrichtungen der elektrischen Energiespeichereinrichtungen jeweils kennliniengesteuert sind.

Insbesondere dient das erfindungsgemäße Verfahren dazu, alle regenerativ erzeugte Energie beziehungsweise Leistung im dezentralen Versorgungsnetz zu nutzen, wobei dies mit der entsprechenden Kennliniensteuerung durchgeführt wird. Nachfolgend wird ein Ausführungsbeispiel gebracht, bei welchem eine Gleichspannung von der Energieverteilereinrichtung bereitgestellt wird. Die entsprechenden Netzumrichtereinrichtungen sind dann zumindest auf der Energieverteilereinrichtungsseite für Gleichspannung ausgelegt. Alternativ kann durch die Energieverteilereinrichtung auch eine Wechselspannung bereitgestellt werden, wobei dann die entsprechenden Netzumrichtereinrichtungen zumindest auf der Energieverteilereinrichtungsseite für Wechselspannung ausgebildet sind.

Gemäß einer vorteilhaften Ausgestaltungsform ist die Energieverteilereinrichtung derart bereitgestellt, dass diese zusätzlich mit einem übergeordneten Netz gekoppelt ist und zum Empfangen von elektrischer Energie aus dem übergeordneten Netz ausgebildet ist. Als übergeordnetes Netz kann beispielsweise ein öffentliches Netz oder beispielsweise ein Werksnetz bereitgestellt werden. Das übergeordnete Netz kann sowohl Wechselspannung als auch Gleichspannung bereitstellen. Insbesondere kann die Energieverteilereinrichtung mit einem Netzumrichter für das übergeordnete Netz bereitgestellt werden. Insbesondere kann somit elektrische Leistung aus dem übergeordneten Netz empfangen werden. Sollte beispielsweise innerhalb des dezentralen Versorgungsnetzes zu wenig elektrische Energie beziehungsweise Leistung zur Verfügung stehen, so kann, ohne dass ein Leistungseinbruch innerhalb des dezentralen Versorgungsnetzes zu verzeichnen ist, entsprechend die elektrische Leistung aus dem übergeordneten Netz empfangen werden. Der Netzumrichter kann dabei sowohl als Wechselrichter als auch als Gleichspannungssteller ausgebildet sein. Dadurch ist es ermöglicht, dass zuverlässig das dezentrale Versorgungsnetz sowohl an einem übergeordneten DC- als auch aus einem übergeordneten AC-Netz betrieben werden kann.

Alternativ kann vorgeschlagen werden, wenn die installierte Leistung beispielsweise der regenerativen Quellen ausreicht, um unter entsprechenden klimatischen Bedingungen im Jahresmittel mehr Energie zu erzeugen, als für den Betrieb der Anlage und die Auffüllung der Speicher, also der elektrischen Energiespeichereinrichtung, erforderlich ist, dann kann man auch während des Punktschweißens auf die Energiezufuhr aus dem übergeordneten Netz verzichten. Der vierte Netzumrichter würde dann nur dazu dienen, überschüssige Energie an das Netz zurück zu speisen. Gegebenenfalls müsste die Leistung der Speicher erhöht oder die Buskapazität aufgestockt werden, um zu verhindern, dass das AFE beim Schweißen in den ungeregelten Zustand verfällt.

In einer weiteren vorteilhaften Ausgestaltungsform wird die Energieverteilereinrichtung derart bereitgestellt, dass diese zusätzlich mit einem übergeordneten Netz gekoppelt ist und zum Übertragen von elektrischer Leistung aus der Energieverteilereinrichtung in das übergeordnete Netz ausgebildet ist. Mit anderen Worten kann vorgesehen sein, sollte ein Überschuss an elektrischer Leistung innerhalb der Energieverteilereinrichtung aufzufinden sein, welche insbesondere nicht durch ein Laden der elektrischen Energiespeichereinrichtung abgefangen werden kann, so kann vorgesehen sein, dass diese überschüssige elektrische Leistung in das übergeordnete Netz gespeist wird. Insbesondere kann hierzu vorgesehen sein, dass entsprechende Einspeisevergütungen für das Einspeisen der überschüssigen elektrischen Leistung ausgezahlt werden können. Insbesondere ist es dadurch ermöglicht, dass auch bei einem Überschuss an elektrischer Leistung dieser nicht verloren geht, sondern entsprechend in das übergeordnete Netz zurückgeführt werden kann. Dadurch ist ein verbesserter Betrieb des dezentralen Versorgungsnetzes ermöglicht.

In einer weiteren vorteilhaften Ausgestaltungsform wird die erste Netzumrichtereinrichtung mittels der Kennlinie derart gesteuert, dass bei einem ersten vorgegebenen Spannungsschwellwert innerhalb der Energieverteilereinrichtung eine maximal mögliche elektrische Leistung der elektrischen Energiespeichereinrichtung für die Energieverteilereinrichtung bereitgestellt wird. Beispielsweise kann vorgesehen sein, dass bei einem Netz, welches im Mittel bei einer Spannung von 650V betrieben wird, der vorgegebene Spannungsschwellwert bei 600 V liegt. Sollte dann innerhalb der Energieverteilereinrichtung die Spannung unter 600 V liegen, so kann vorgesehen sein, dass die elektrische Energiespeichereinrichtung die maximal mögliche elektrische Leistung in die Energieverteilereinrichtung einspeist. Dies hat insbesondere den Hintergrund darin, sollten beispielsweise kurzfristig hohe elektrische Leistungen innerhalb der Energieverteilereinrichtung benötigt werden, so können diese durch die elektrische Energiespeichereinrichtung bereitgestellt werden. Insbesondere ist es dadurch ermöglicht, dass keine zusätzliche elektrische Leistung aus einem übergeordneten Netz bezogen werden muss. Mit anderen Worten wird lokal die elektrische Energie bereitgestellt, auch wenn hohe Kurzzeitleistungen innerhalb des dezentralen Versorgungsnetzes abgerufen werden, welche das dezentrale Versorgungsnetz außergewöhnlich belasten, wie das z.B. beim Punktschweißen der Fall ist. Die hohen Ströme führen zu einem deutlichen transienten Abfall der Spannung innerhalb der Energieverteilereinrichtung, beispielsweise um 100 V. Traditionell im Stand der Technik wird die vierte Netzumrichtereinrichtung derart ausgelegt, dass das dezentrale Versorgungsnetz kurzzeitig 600 kW aus dem übergeordneten Netz beziehen kann. Liegt die mittlere Verbraucherlast im Normalbetrieb beispielsweise bei 10kW, dann arbeitet ein entsprechender Netzumrichter auf der übergeordneten Netzseite fast immer im Bereich verlustreicher Niedriglasten. Sollte es nun zu einem solchen Punktschweißprozess innerhalb des dezentralen Versorgungsnetzes kommen, so ist insbesondere vorgesehen, dass unabhängig vom Ladezustand des elektrischen Energiespeichers dieser die maximal mögliche elektrische Leistung bereitstellt, um einem Spannungseinbruch innerhalb der Energieverteilereinrichtung entgegenzuwirken. Insbesondere, sollte das dezentrale Versorgungsnetz eine Vielzahl von elektrischen Energiespeichereinrichtungen aufweisen, so kann hier vorgesehen sein, dass die Vielzahl von elektrischen Energiespeichereinrichtungen unabhängig von ihrem Ladezustand die maximal mögliche elektrische Leistung für die Energieverteilereinrichtung bereitstellen, um einen Spannungseinbruch innerhalb der Energieverteilereinrichtung zu verhindern. Weiterhin vorteilhaft ist, wenn die erste Netzumrichtereinrichtung mittels der Kennlinie derart gesteuert wird, dass bei einem zweiten vorgegebenen Spannungsschwellwert innerhalb der Energieverteilereinrichtung die elektrische Energiespeichereinrichtung mit einer maximal möglichen elektrischen Leistung aus der Energieverteilereinrichtung geladen wird. Insbesondere ist es dadurch vorgesehen, dass die lokal erzeugte Energie beziehungsweise Leistung der elektrischen Energieerzeugungseinrichtung somit zum Laden der elektrischen Energiespeichereinrichtung genutzt wird. Insbesondere wird dabei überschüssige Leistung aus dem dezentralen Versorgungsnetz somit zum Laden der elektrischen Energiespeichereinrichtung verwendet. Dadurch ist es ermöglicht, dass die lokal erzeugte Energie beziehungsweise Leistung im lokalen Netz verbleiben kann, und insbesondere im Nachhinein dann entsprechend viel elektrische Leistung für die Energieverteilereinrichtung bei Bedarf bereitgestellt werden kann.

Weiterhin vorteilhaft ist, wenn die erste Netzumrichtereinrichtung mittels der Kennlinie derart gesteuert wird, dass innerhalb eines vorgegebenen Spannungsbereichs innerhalb der Energieverteilereinrichtung keine elektrische Leistung zwischen der elektrischen Energiespeichereinrichtung und der Energieverteilereinrichtung ausgetauscht wird, insbesondere dann, wenn die mittlere Verbraucherleistung im Normalbetrieb gleich dem Leistungseintrag der regenerativen Quellen ist. Im Beispiel kann dies beispielsweise bei einem Mittelwert von 650 V liegen, sodass der Bereich beispielsweise zwischen 640 V und 660 V aufgezogen wird. Dieser Spannungsbereich kennzeichnet damit zugleich den Normalbetrieb, in Abgrenzung zur außergewöhnlichen Belastung, die die Spannung der Energieverteilereinrichtung aus diesem Bereich herausführt. Innerhalb dieses Bereichs kann dann vorgesehen sein, dass keine elektrische Leistung zwischen der Energieverteilereinrichtung und der elektrischen Energiespeichereinrichtung ausgetauscht wird. Dies hat insbesondere den Hintergrund darin, dass sich die elektrische Energiespeichereinrichtung andernfalls im Normalbetrieb permanent an der Abdeckung der Verbraucherlast beteiligt und damit unnötig entlädt.

In einer weiteren vorteilhaften Ausgestaltungsform wird die erste Netzumrichtereinrichtung mittels der Kennlinie derart gesteuert, dass unterhalb eines ersten vorgegebenen Ladezustands der elektrischen Energiespeichereinrichtung die elektrische Energiespeichereinrichtung mit einer maximal möglichen elektrischen Leistung $P_{max}$ von der Energieverteilereinrichtung geladen wird. Sollte beispielsweise ein Ladelevel der elektrischen Energiespeichereinrichtung unterhalb von 20 % liegen, so droht eine entsprechende Unterladung und es kann zur Beeinträchtigung der elektrischen Energiespeichereinrichtung führen. Dadurch ist es insbesondere vorgesehen, dass, sollte der Ladezustand unterhalb dieses vorgegebenen Ladezustands liegen, möglichst schnell und effizient die elektrische Energiespeichereinrichtung wieder aufgeladen wird. Dadurch kann eine Unterladung der elektrischen Energiespeichereinrichtung verhindert werden.

Ebenfalls vorteilhaft ist, wenn die erste Netzumrichtereinrichtung mittels der Kennlinie derart gesteuert wird, dass oberhalb eines zweiten vorgegebenen Ladezustands der elektrischen Energiespeichereinrichtung eine maximal mögliche elektrische Leistung $P_{max}$' von der elektrischen Energiespeichereinrichtung für die Energieverteilereinrichtung bereitgestellt wird. Insbesondere kann damit eine Überladung verhindert werden. Sollte beispielsweise der Ladezustand oberhalb von 95 % liegen, so wird die elektrische Leistung für die Energieverteilereinrichtung bereitgestellt. Sollte innerhalb der Energieverteilereinrichtung diese überschüssige Leistung nicht benötigt werden, so kann beispielsweise vorgesehen sein, dass diese überschüssige elektrische Leistung dann in das übergeordnete Netz zurückgespeist wird. Dadurch kann die Überladung verhindert und die überschüssige Leistung zwar nicht lokal aber im übergeordneten Netz nachgenutzt werden.

Gemäß einer weiteren vorteilhaften Ausgestaltungsform wird die erste Netzumrichtereinrichtung mittels der Kennlinie derart gesteuert, dass zwischen einem dritten vorgegebenen Ladezustand der elektrischen Energiespeichereinrichtung und einem vierten vorgegebenen Ladezustand der elektrischen Energiespeichereinrichtung die elektrische Energiespeichereinrichtung in Abhängigkeit von einer elektrischen Energiebereitstellung der dezentralen Energieerzeugungseinrichtung die elektrische Leistung bereitstellt oder mit der elektrischen Leistung geladen wird. Dieser Ladezustandsbereich kann beispielsweise durch 25% bis 90% des Ladezustandes, welcher auch als SOC (state of charge) bezeichnet werden kann, definiert sein. Es handelt sich somit um einen mittleren Bereich, wobei hierbei dann die Netzumrichtereinrichtung auf die effektive Einspeiseleistung von $\Delta P = -(P_{Last} + P_{RQ})$ ausgelegt ist (unter Beachtung der Vorzeichenregel, dass positive Stromrichtung im Folgenden immer von der entsprechenden Komponente zur Energieverteilereinrichtung zeigt), das heißt die Energiespeichereinrichtung lädt sich auf oder speist ein, je nachdem, ob die dezentrale Energieerzeugungseinrichtung mehr oder weniger Leistung liefert, als die Last im Normalbetrieb abfordert. Dabei entspricht $P_{RQ}$ der Leistung der regenerativen Energiequelle und $P_{Last}$ der Verbraucherlast. Dadurch ist ein verbesserter Betrieb des dezentralen Versorgungsnetzes ermöglicht.

Insbesondere bei beispielsweise regenerativen Energiequellen als dezentrale Energieerzeugungseinrichtung sind die Erzeugungsbedingungen zur Erzeugung der elektrischen Leistung nicht sicher vorhersehbar, sodass sich die Entwicklung des Ladezustands der elektrischen Energiespeichereinrichtung nach den aktuellen Möglichkeiten der regenerativen Quellen richtet. Für eine energieeffiziente Fahrweise sollte aber in jedem Fall nur dann elektrische Leistung mit dem übergeordneten Netz, insbesondere mit einem öffentlichen Netz, ausgetauscht werden, wenn temporär außergewöhnlich hohe Leistung abgefordert wird, beispielsweise geschweißt wird, oder wenn der Ladezustand der elektrischen Energiespeichereinrichtung einen der kritischen Werte annimmt. Ansonsten wird alle regenerativ erzeugte Energie beziehungsweise Leistung im dezentralen Versorgungsnetz genutzt. Insbesondere dient das erfindungsgemäße Verfahren somit dazu, wie dies mit der entsprechenden Kennliniensteuerung erreicht werden kann.

Ferner kann vorgesehen sein, dass zwischen dem ersten vorgegebenen Ladezustand und dem dritten vorgegebenen Ladezustand, wobei dies beispielsweise insbesondere zwischen 20 % und 25% des Ladezustands liegt, und dem zweiten Ladezustand und dem vierten Ladezustand, wobei dies insbesondere beispielsweise zwischen 90 % und 95% des Ladezustands liegt, aus Stabilitätsgründen eine Vermittlung zwischen den mittleren und den äußeren Bereichen stattfinden kann. Dies kann zum Beispiel durch SOC-abhängige lineare Interpolation zwischen einer maximalen Leistung und ∆P erfolgen.

In einer weiteren vorteilhaften Ausgestaltungsform wird die erste Netzumrichtereinrichtung mittels der Kennlinie derart gesteuert, dass eine bereitgestellte elektrische Leistung durch die dezentrale Energieerzeugungseinrichtung bei der Bereitstellung der elektrischen Leistung durch die elektrische Energiespeichereinrichtung berücksichtigt wird. Insbesondere wird dabei die aktuelle Erzeugung von elektrischer Leistung durch die elektrische Energieerzeugungseinrichtung berücksichtigt. Dadurch kann vorteilhaft das dezentrale Versorgungsnetz betrieben werden.

Gemäß einer weiteren vorteilhaften Ausgestaltungsform wird das Netzsteuerungssystem mit zumindest einer Erfassungseinrichtung zum Erfassen von zumindest einer benötigten elektrischen Leistung des elektrischen Verbrauchers und/oder zum Erfassen einer bereitgestellten elektrischen Leistung der dezentralen Energieerzeugungseinrichtung bereitgestellt. Insbesondere kann hierzu das Netzsteuerungssystem eine elektronische Recheneinrichtung aufweisen, welche die erfassten Werte auswertet und in Abhängigkeit davon entsprechend eine Steuerung des dezentralen Versorgungsnetzes durchführt. Insbesondere wird somit die Kennlinie im laufenden Anlagenbetrieb stetig verschoben, sodass die entsprechenden Werte für $P_{max}$ / $P_{max}'$ und ∆P an der elektrischen Energiespeichereinrichtung als Stellgrößen weitergegeben werden. Die benötigte elektrische Leistung und die bereitgestellte elektrische Leistung sind im Normalbetrieb eine langsam veränderliche Größe, sodass keine sonderlich hohen Anforderungen an diese Auflösung der Messung gestellt werden. Ähnliches gilt auch für die Reaktionszeit der elektrischen Energiespeichereinrichtung.

Ferner ist insbesondere vorgesehen, dass als dezentrale Energieerzeugungseinrichtung eine regenerative Energiequelle bereitgestellt wird. Als regenerative Energiequelle kann beispielsweise eine Photovoltaikanlage oder eine Windkraftanlage angesehen werden. Insbesondere da diese wetterabhängig die elektrische Energie erzeugen, ist somit durch das erfindungsgemäße Verfahren ein verbesserter Betrieb ermöglicht.

Ein weiterer Aspekt der Erfindung betrifft ein Netzsteuerungssystem für ein dezentrales Versorgungsnetz, mit zumindest einer elektronischen Recheneinrichtung, wobei das Netzsteuerungssystem zum Durchführen eines Verfahrens nach dem vorhergehenden Aspekt ausgebildet ist. Insbesondere wird das Verfahren mittels des Netzsteuerungssystems durchgeführt.

Ein nochmals weiterer Aspekt der Erfindung betrifft ein Computerprogramm, welches direkt in einen Speicher einer elektronischen Recheneinrichtung einer Magnetresonanzanlage ladbar ist, mit Programm-Mitteln, um die Schritte des Verfahrens nach einem der vorhergehenden Aspekte auszuführen, wenn das Programm in der elektronischen Recheneinrichtung der Magnetresonanzanlage ausgeführt wird.

Ein nochmals weiterer Aspekt der Erfindung betrifft einen elektronisch lesbaren Datenträger mit darauf gespeicherten elektronisch lesbaren Steuerinformationen, welche zumindest ein Computerprogramm nach den vorhergehenden Aspekten umfassen und derart ausgestaltet sind, dass sie bei Verwendung des Datenträgers in einer elektronischen Recheneinrichtung einer Magnetresonanzanlage ein Verfahren nach einem dem vorhergehenden Aspekt durchführen.

Vorteilhafte Ausgestaltungsformen des Verfahrens sind als vorteilhafte Ausgestaltungsformen des Netzsteuerungssystems, der Computerprogramms sowie des elektronisch lesbaren Datenträgers anzusehen. Das Netzsteuerungssystem weist dazu gegenständliche Merkmale auf, welche eine Durchführung des Verfahrens oder einer vorteilhaften Ausgestaltungsform davon ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen.

Die Erfindung wird nun anhand von bevorzugten Ausführungsbeispielen sowie unter Bezugnahme auf die beigefügten Zeichnungen näher erläutert.

Dabei zeigen:

FIG 1    eine schematische Ansicht einer Ausführungsform eines dezentralen Versorgungsnetzes;

FIG 2    eine Beispielkennlinie einer regenerativen, dezentralen Energieerzeugungseinrichtung;

FIG 3    eine Beispielkennlinie einer elektrischen Energiespeichereinrichtung;

FIG 4    ein Prinzipschaltbild eines Ladeverhaltens einer elektrischen Energiespeichereinrichtung;

FIG 5    ein Kennlinienverlauf einer ersten Netzumrichtereinrichtung in einer ersten Situation;

FIG 6    ein weiterer Kennlinienverlauf der ersten Netzumrichtereinrichtung in einer zweiten Situation; und

FIG 7     einen weiteren Kennlinienverlauf des ersten Netzumrichters in einer dritten Situation,

In den Figuren sind gleiche oder funktionsgleiche Elemente mit gleichen Bezugszeichen versehen.

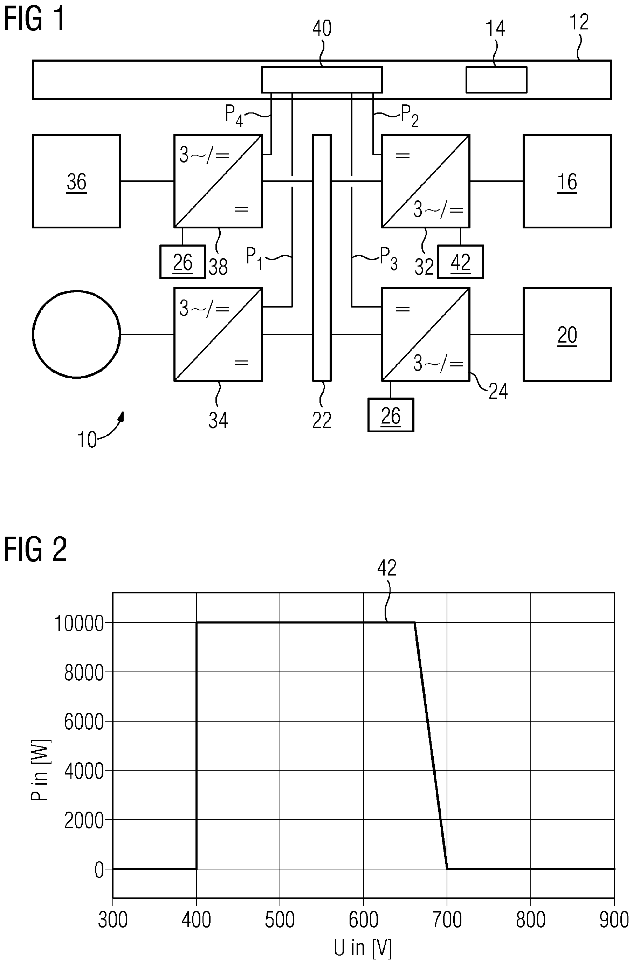

FIG 1 zeigt in einer schematischen Ansicht eine Ausführungsform eines dezentralen Versorgungsnetzes 10. Das dezentrale Versorgungsnetz 10 wird mit einem Netzsteuerungssystem 12 betrieben. Das Netzsteuerungssystem 12 weist insbesondere eine elektronische Recheneinrichtung 14 auf. Das dezentrale Versorgungsnetz 10 weist eine dezentrale Energieerzeugungseinrichtung 16 auf, wobei diese insbesondere als regenerative Energiequelle ausgebildet ist. Beispielsweise kann es sich bei der regenerativen Energiequelle um eine Photovoltaikanlage oder eine Windkraftanlage handeln. Ferner weist das dezentrale Versorgungsnetz 10 einen elektrischen Verbraucher 18 auf. Der elektrische Verbraucher 18 kann beispielsweise ein Motor sein. Des Weiteren weist das dezentrale Versorgungsnetz 10 eine elektrische Energiespeichereinrichtung 20 auf. Ferner weist das dezentrale Versorgungsnetz 10 eine elektrische Energieverteilereinrichtung 22 auf, welche insbesondere als Gleichspannungs-Bus ausgebildet sein kann. Alternativ kann diese auch als Wechselspannungs-Bus ausgebildet sein. An der elektrischen Energieverteilereinrichtung 22 ist die dezentrale Energieerzeugungseinrichtung 16, die elektrische Energiespeichereinrichtung 20 und der elektrische Verbraucher 18 elektrisch gekoppelt. Zumindest zwischen der elektrischen Energiespeichereinrichtung 20 und der elektrischen Energieverteilereinrichtung 22 ist eine erste Netzumrichtereinrichtung 24 angeordnet. Insbesondere ist im vorliegenden Ausführungsbeispiel die erste Netzumrichtereinrichtung 24 als DC/DC-Steller ausgebildet.

Die erste Netzumrichtereinrichtung 24 wird insbesondere in Abhängigkeit von einer elektrischen Spannung innerhalb der Energieverteilereinrichtung 22 kennliniengesteuert, sodass in Abhängigkeit einer Kennlinie 26 elektrische Leistung von der elektrischen Energiespeichereinrichtung 20 für die Energieverteilereinrichtung 22 bereitgestellt wird oder die elektrische Energiespeichereinrichtung 20 mit elektrischer Leistung der Energieverteilereinrichtung 22 geladen wird.

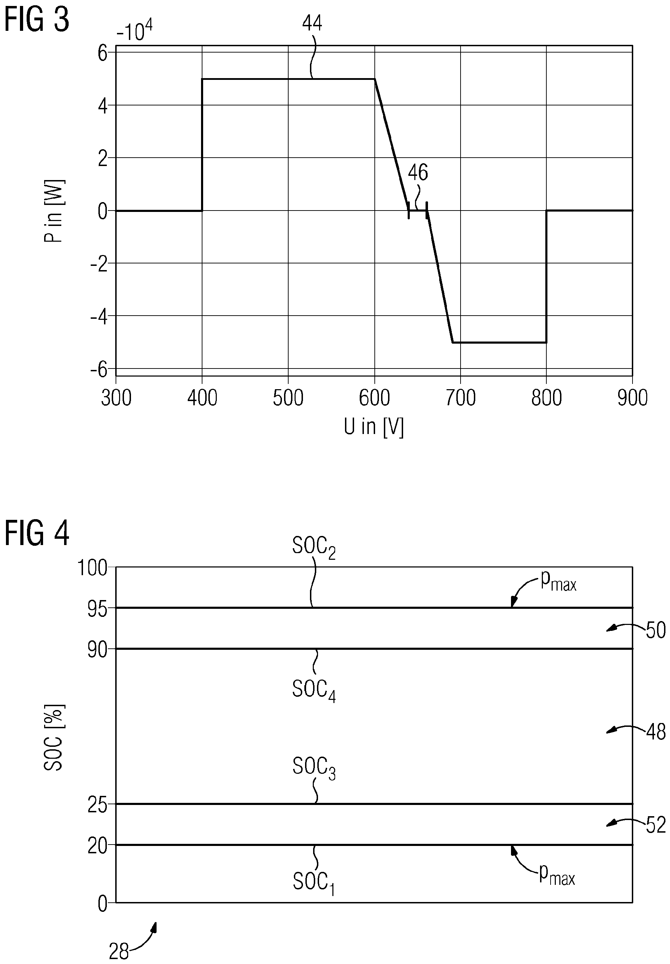

Es ist vorgesehen, dass die erste Netzumrichtereinrichtung 24 zusätzlich in Abhängigkeit von einem aktuellen Ladezustand 28 (FIG 4) der elektrischen Energiespeichereinrichtung 20 kennliniengesteuert wird, so dass zusätzlich ladezustandsabhängig elektrische Leistung von der elektrischen Energiespeichereinrichtung 20 für die Energieverteilereinrichtung 22 bereitgestellt wird oder die elektrische Energiespeichereinrichtung 20 mit elektrischer Leistung der Energieverteilereinrichtung 22 geladen wird.

Insbesondere zeigt die FIG 1 ferner, dass zwischen der dezentralen Energieerzeugungseinrichtung 16 eine weitere zweite Netzumrichtereinrichtung 32 ausgebildet sein kann. Diese ist im vorliegenden Ausführungsbeispiel insbesondere ebenfalls als DC/DC-Steller ausgebildet. Alternativ kann diese auch als Kombination aus Wechselrichter und DC/DC-Steller ausgebildet sein. Des Weiteren kann vorgesehen sein, dass vor dem elektrischen Verbraucher 18 ebenfalls eine dritte Netzumrichtereinrichtung 34 ausgebildet ist. Diese kann sowohl als Wechselrichter als auch als DC/DC-Steller ausgebildet sein.

Des Weiteren kann vorgesehen sein, dass die Energieverteilereinrichtung 22 derart bereitgestellt wird, dass diese zusätzlich mit einem übergeordneten Netz 36 gekoppelt ist und zum Empfangen von elektrischer Leistung aus dem übergeordneten Netz 36 ausgebildet ist. Insbesondere kann hierzu zwischen dem übergeordneten Netz 36 und der Energieverteilereinrichtung 22 eine vierte Netzumrichtereinrichtung 38 ausgebildet sein, welche als Wechselrichter oder als DC/DC-Steller ausgebildet sein kann. Hierzu kann ferner vorgesehen sein, dass die Energieverteilereinrichtung 22 derart bereitgestellt wird, dass diese zusätzlich mit einem übergeordneten Netz 36 gekoppelt ist und zum Übertragen von elektrischer Leistung aus der Energieverteilereinrichtung 22 in das übergeordnete Netz 36 ausgebildet ist. Mit anderen Worten kann ein bidirektionaler Energieaustausch zwischen dem übergeordneten Netz 36 und der Energieverteilereinrichtung 22 durchgeführt werden. Insbesondere kann hierzu die elektronische Recheneinrichtung 14 entsprechend der vorhandenen elektrischen Spannung innerhalb der Energieverteilereinrichtung 22 eine entsprechende Steuerung durchführen.

Bevorzugt kann vorgesehen sein, dass das dezentrale Versorgungsnetz 10 eine Vielzahl von elektrischen Energiespeichereinrichtungen 20, eine Vielzahl von dezentralen Erzeugungseinrichtungen 16, eine Vielzahl von elektrischen Verbrauchern 18 und ein Vielzahl von Netzumrichtern zwischen dem lokalen und dem übergeordneten oder mehreren übergeordneten Netzen 36 aufweist. Insbesondere können auch mehrere Netzumrichtereinrichtungen 24, 32, 34, 38 beziehungsweise Gleichrichter zwischen dem dezentralen Versorgungsnetz 10 und dem übergeordnetem Netz 36, um so beispielsweise eine Redundanz zu schaffen. Insbesondere können die jeweiligen Elemente dann mit jeweiligen Netzumrichtereinrichtungen 24, 32, 34, 38 bereitgestellt werden, wobei insbesondere die Netzumrichtereinrichtung 24 der elektrischen Energiespeichereinrichtung 20 jeweils kennliniengesteuert ist.

FIG 1 zeigt ferner, dass das Netzsteuerungssystem 12 mit zumindest einer Erfassungseinrichtung 40 zum Erfassen von zumindest einer benötigten elektrischen Leistung als Verbraucherleistung $P_1$ des elektrischen Verbrauchers 18 und/oder zum Erfassen einer bereitgestellten elektrischen Leistung als Energieerzeugungsleistung $P_2$ der dezentralen Erzeugungseinrichtung 16 bereitgestellt wird. Insbesondere kann zusätzlich auch eine Speicherenergie als Speicherleistung $P_3$ erfasst werden sowie eine Netzenergie als übergeordnete Netzleistung $P_4$.

Insbesondere zeigt die FIG 1 somit einen vereinfachten Aufbau des dezentralen Versorgungsnetzes 10. Als elektrischer Verbraucher 18 gelten alle Anlagenkomponenten, die dem System im Mittel mehr Leistung entziehen als sie zurückspeisen. Der daraus resultierende Verbrauch muss vom dezentralen Versorgungsnetz 10 unter allen Umständen zur Verfügung gestellt werden, um die Produktion zu sichern. Deshalb wären Kennlinien, die den Leistungsbedarf der dritten Netzumrichtereinrichtung 34 einschränken würden, eher kontraproduktiv, so dass für den elektrischen Verbraucher 18 keine P(U)-Profile spezifiziert werden. Die vierte Netzumrichtereinrichtung 38 stellt insbesondere elektrische Leistung aus dem übergeordneten Netz 36 zur Verfügung, wenn die innerhalb der Energieverteilereinrichtung 22 vorhandene elektrische Leistung temporär nicht ausreicht, um den elektrischen Verbraucher 18 zu versorgen. Die regenerative Energiequelle, welche im vorliegenden Ausführungsbeispiel der dezentralen Energieerzeugungseinrichtung 16 entspricht, ist in der Regel nicht rückspeisefähig, das heißt sie speist Leistung entsprechend den Witterungsbedingungen in das dezentrale Versorgungsnetz 10 ein, von 0 bis zur Nennleistung. Eine entsprechende Kennlinie ist insbesondere in der FIG 2 gezeigt. Die FIG 2 zeigt somit eine Erzeugungseinrichtungskennlinie 42. In der FIG 2 ist insbesondere auf einer Abszisse die Spannung U in Volt aufgetragen und auf der Ordinate eine Leistung P in Watt. Die FIG 2 zeigt rein beispielhaft, dass die regenerative Energiequelle bei 400 V 10 kW Leistung erbringen kann und bei 700 V keine Leistung mehr erzeugt. Hierbei ist insbesondere zu beachten, dass die positive Stromrichtung im Folgenden immer von der entsprechenden Komponente zur Energieverteilereinrichtung 22 zeigt.

Die dezentrale Energieerzeugungseinrichtung 16 liefert zu einem gegebenen Zeitpunkt eine konstante Leistung bis zu einer Spannung leicht über der Nennspannung der Energieverteilereinrichtung 22, welche in diesem vorliegenden Ausführungsbeispiel insbesondere 650 V entspricht. Steigt die Spannung weiter, wird die Einspeiseleistung auf 0 reduziert. Dabei kann sich die Obergrenze der Leistung, insbesondere hier 10 kW, zum Beispiel entsprechend der Sonneneinstrahlung verändern. Um einen entsprechenden Überschuss an Energie beziehungsweise Leistung innerhalb der Energieverteilereinrichtung 22 sicher bewältigen können, können entsprechende netzseitige Netzumrichter, im vorliegenden Ausführungsbeispiel die vierte Netzumrichtereinrichtung 38, am übergeordneten Netz 36 über eine Kennlinie verfügen. Ein entsprechendes Active Front End (AFE) regelt nicht die Leistungsabgabe, sondern den eingespeisten Strom bei gegebener Busspannung. Der Nulldurchgang liegt insbesondere bei der Nennspannung der Energieverteilereinrichtung 22, sodass der Netzumrichter bei Über- oder Unterspannung, in das Netz zurück speist oder elektrische Leistung aus dem übergeordneten Netz 36 bezieht. Ohne eine elektrische Energiespeichereinrichtung 20 und eine dezentrale Energieerzeugungseinrichtung 16 verschiebt die Verbraucherlast die Busspannung nach unten, es sei denn, auslaufende elektrische Verbraucher 18 würden beispielsweise temporär Leistung zurückspeisen.

Insbesondere zeigt somit die FIG 2, dass vorgesehen sein kann, dass der erste Netzumrichter 24 mittels der Kennlinie 26 derart gesteuert wird, dass eine bereitgestellte elektrische Leistung durch die dezentrale Energieerzeugungseinrichtung 16 bei der Bereitstellung der elektrischen Leistung durch die elektrische Energiespeichereinrichtung 20 berücksichtigt wird.

Um das permanente Laden/Entladen von der elektrischen Energiespeichereinrichtung 20 bei normalen Lastwechseln der elektrischen Verbraucher 18 in der Nähe der Nennspannung zu vermeiden, eignet sich zum Beispiel eine Speicherkennlinie 44, wie dies in der FIG 3 gezeigt ist. FIG 3 zeigt somit insbesondere, dass die erste Netzumrichtereinrichtung 24 mittels der Kennlinie 26 derart gesteuert wird, dass innerhalb eines vorgegebenen Spannungsbereichs 46 innerhalb der Energieverteilereinrichtung 22 keine elektrische Leistung zwischen der elektrischen Energiespeichereinrichtung 20 und der Energieverteilereinrichtung 22 ausgetauscht wird, wenn die regenerative Energieerzeugungseinheit gerade den Bedarf des Verbrauchers im Normalbetrieb abdeckt. Der Bereich ohne Einspeisung, im vorliegenden Ausführungsbeispiel somit zwischen 640 V und 660 V, kann dabei zum Beispiel so gewählt werden, dass sich die Busspannung bei allen mäßigen Lastschwankungen innerhalb des dezentralen Versorgungsnetzes 10, also im Normalbetrieb, nicht aus diesem Spannungsbereich 46 herausbewegt.

Im Folgenden wird nicht danach unterschieden, um welche Art von elektrischen Energiespeichereinrichtung 20 es sich handelt, sofern sie an ihrer Systemschnittstelle elektrische Leistung zur Verfügung stellen oder abrufen. Der Ladezustand des Speichers (State of Charge / SOC) kann dann jeweils entsprechend der Vorzeichenkonvention nach

$$SOC(t) - SOC(t_0) = \frac{-\int_{t_0}^{t} I(\tau)d\tau}{\max\left\{\left|\int_{t_0}^{t} I(\tau)d\tau\right|\right\}} = -\frac{1}{C^{nom}}\int_{t_0}^{t} I(\tau)d\tau$$

mit dem Ladestrom I(t), der nominalen elektrischen Speicherkapazität $C_{nom}$ und der Festlegung $SOC(t_0)$ = $SOC_{initial}$ berechnet werden. Dabei wird davon ausgegangen, dass der Ladestrom unterhalb SOC=0 und oberhalb SOC=1 verschwindet. Für Batterien ist dieses Verständnis leicht nachzuvollziehen. Für einen als Schwungmassenspeicher betriebenen Motor würde man beispielsweise jeweils den Stromfluss aufsummieren, der nötig ist, um den Motor von der unteren Grenzdrehzahl bis zu seiner Nenndrehzahl im Feldschwächebereich zu beschleunigen.

Wegen der Vorzeichenregel gilt die folgende allgemeine Leistungsbilanz im System

$$P_{NU}(V_{dc}) + P_{RQ}(V_{dc}) + P_V(V_{dc}) + P_{Sp}(V_{dc}) = 0$$

mit den Leistungen des Netzumrichters $P_{NU}$ ($P_4$), der regenerativen Quelle $P_{RQ}$ ($P_2$), des Verbrauchers $P_V$ ($P_1$) und des Speichers $P_{Sp}$ ($P_3$). Dabei wird vorausgesetzt, dass die Spannung $V_{dc}$ nur unwesentlich vom Ort abhängt, was für übliche Leitungslängen in dezentralen Versorgungsnetzen eine gute Näherung ist. Im Normalbetrieb ohne Netzsteuerungssystem 12 sind die Speicher inaktiv ($P_{Sp}(V_{dc})=0$), das heißt die vierte Netzumrichtereinrichtung 38 stellt zu jedem Zeitpunkt genau die negative Summenleistung aus zusätzlicher Einspeisung durch die regenerativen Quellen und dem aktuellem Verbrauch zur Verfügung oder speist sie zurück, je nachdem, ob $|P_{RQ}|$ den Verbrauch $|P_V|$ unter- oder überschreitet.

Ein wesentlicher Gedanke des nachstehend beschriebenen Verfahrens ist es, den Energieaustausch über die vierte Netzumrichtereinrichtung 38 nur während außergewöhnlicher Belastungen wie beim Punktschweißen oder zum Nach- oder Entladen der Speicher beim Erreichen kritischer Ladezustände zu ermöglichen. Beim Punktschweißen mit der Leistung $P_{PS}$ fallen beispielsweise Lasten von ungefähr 550 kW über 150 ms an. Die hohen Ströme führen zu einem deutlich transienten Abfall der Busspannung, etwa 100 V. Gemäß dem Stand der Technik wird durch das übergeordnete Netz 36 dann entsprechend kurzzeitig elektrische Leistung bereitgestellt. Liegt die mittlere Verbraucherlast im Normalbetrieb $P_{Last} = P_V - P_{PS}$ in der Anlage bei einigen kW, dann arbeitet ein entsprechendes AFE allerdings fast immer im Bereich verlustreicher Niedriglasten. Soll nun eine kleinere vierte Netzumrichtereinrichtung 38 zum Einsatz kommen, so muss die Nennleistung die Grundlast der restlichen Verbraucher 18 abdecken können, falls die dezentrale Energieerzeugungseinrichtung 16 versiegt. Ferner müssen die Energieerzeugungseinrichtung 16 und die elektrische Energiespeichereinrichtung 20 beim Punktschweißen $P_{PS}$ die verbleibenden 500 kW zur Verfügung stellen können, ohne dass die vierte Netzumrichtereinrichtung 38 in den ungeregelten Gleichrichterbetrieb verfällt. Des Weiteren sollte die elektrische Speichereinrichtung 20 bei $P_{RQ} + P_{Last} > 0$ im Normalbetrieb, insbesondere ohne Punktschweißen $P_{PS}$, aus dem Überschuss $P_{RQ} + P_{Last}$ geladen werden, sodass der Strom innerhalb der vierten Netzumrichtereinrichtung 38 verschwindet. Des Weiteren sollte die elektrische Energiespeichereinrichtung 20 bei $P_{RQ} + P_{Last} < 0$ im Normalbetrieb das Defizit $P_{RQ} + P_{Last}$ liefern, sodass der Strom der vierten Netzumrichtereinrichtung 38 wiederum verschwindet und die elektrische Leistung aus der dezentralen Energieerzeugungseinrichtung 16 und dem vorherigen Speichereintrag innerhalb der Energieverteilereinrichtung 22 verbleibt. Ferner dürfen sich die elektrische Energiespeichereinrichtung 20 nur bei einem kritischen Ladezustand SOC, zum Beispiel bei einem Ladezustand kleiner als 25 % aus dem übergeordneten Netz 36 aufladen und bei einem oberen Ladezustand SOC größer als 90 % in das übergeordnete Netz 36, insbesondere das öffentliche Netz, entladen.

FIG 4 zeigt in einer schematischen Ansicht beispielhaft eine Kennliniensteuerung mit dem aktuellen Ladezustand 28. FIG 4 zeigt somit insbesondere dass die erste Netzumrichtereinrichtung 24 mittels der Kennlinie 26 derart gesteuert wird, dass unterhalb eines ersten vorgegebenen Ladezustands $SOC_1$ der elektrischen Energiespeichereinrichtung 20 die elektrische Energiespeichereinrichtung 20 mit einer maximal möglichen elektrischen Leistung $P^{max}$ von der Energieverteilereinrichtung 22 geladen wird. Ferner zeigt die FIG 4, dass die erste Netzumrichtereinrichtung 24 mittels der Kennlinie 26 derart gesteuert wird, dass oberhalb eines zweiten vorgegebenen Ladezustands $SOC_2$ der elektrischen Energiespeichereinrichtung 20 eine maximal mögliche elektrische Leistung $P^{max'}$ von der elektrischen Energiespeichereinrichtung 20 für die Energieverteilereinrichtung 22 bereitgestellt wird.

Des Weiteren zeigt die FIG 4, dass die erste Netzumrichtereinrichtung 24 mittels der Kennlinie 26 derart gesteuert wird, dass zwischen einem dritten vorgegebenen Ladezustand $SOC_3$ der elektrischen Energiespeichereinrichtung 20 und einem vierten vorgegebenen Ladezustand $SOC_4$ der elektrischen Energiespeichereinrichtung 20 die elektrische Energiespeichereinrichtung 20 in Abhängigkeit von einer elektrischen Energiebereitstellung der dezentralen Energieerzeugungseinrichtung 16 die elektrische Leistung bereitstellt oder mit der elektrischen Leistung geladen wird. Dies ist insbesondere durch den Bereich 48 dargestellt. Des Weiteren zeigt die FIG 4 jeweils einen Übergangsbereich 50, 52. Der erste Übergangsbereich 50 ist zwischen dem zweiten Ladezustand $SOC_2$ und dem vierten Ladezustand $SOC_4$ ausgebildet. Ein zweiter Übergangsbereich 52 ist zwischen dem ersten Ladezustand $SOC_1$ und dem dritten Ladezustand $SOC_3$ ausgebildet.

Insbesondere da die Witterungsbedingungen nicht sicher vorhersagbar sind, richtet sich die Entwicklung des Ladezustands SOC der elektrischen Energiespeichereinrichtung 20 nach den aktuellen Möglichkeiten der dezentralen Energieerzeugungseinrichtung 16. Für eine energieeffiziente Fahrweise sollte aber in jedem Fall nur dann elektrische Leistung mit dem übergeordneten Netz 36 ausgetauscht werden, wenn beispielsweise geschweißt wird oder wenn der Ladezustand SOC der elektrischen Energiespeichereinrichtung 20 einen der kritischen Werte annimmt. Ansonsten wird alle regenerative erzeugte Energie beziehungsweise Leistung in dem dezentralen Versorgungsnetz 10 genutzt.

FIG 4 zeigt beispielhaft hier das Ladeverhalten der elektrischen Energiespeichereinrichtung 20 im Normalbetrieb. In dem Bereich 48, in welchem der Ladezustand SOC zwischen 25 % und 90 % liegt, regelt der erste Netzumrichter 24 auf die effektive Einspeiseleistung $\Delta P = -(P_{Last} + P_{RQ})$, das heißt er lädt sich auf oder speist ein, je nachdem ob die dezentrale Energieerzeugungseinrichtung 16 mehr oder weniger Leistung liefert, als die Last im Normalbetrieb abfordert. Fig. 4 zeigt rein beispielhaft, wie entsprechende Ladezustandsbereiche definiert werden können. Es ist selbstverständlich, dass auch weitere Ladezustandsbereiche definiert werden können.

Im Bereich oberhalb von 95 %, welcher dem zweiten Ladezustand $SOC_2$ entspricht, und unterhalb von 20 %, welches im vorliegenden Ausführungsbeispiel dem ersten Ladezustand $SOC_1$ entspricht, droht Über- oder Unterladung der elektrischen Energiespeichereinrichtung 20, sodass er sich jeweils mit einer maximalen Last $P^{max}$ lädt oder mit $P^{max'}$ entlädt.

In den Übergangsbereichen 50, 52, welche im vorliegenden Ausführungsbeispiel einem Ladezustand SOC von 90 % bis 95 % entsprechen und einem Ladezustand SOC zwischen 20 % und 25% kann aus Stabilitätsgründen eine Vermittlung zwischen den mittleren und den äußeren Bereichen stattfinden. Dies kann zum Beispiel durch ladezustandsabhängige lineare Interpolation zwischen $P^{max}$ und $\Delta P$ erfolgen.

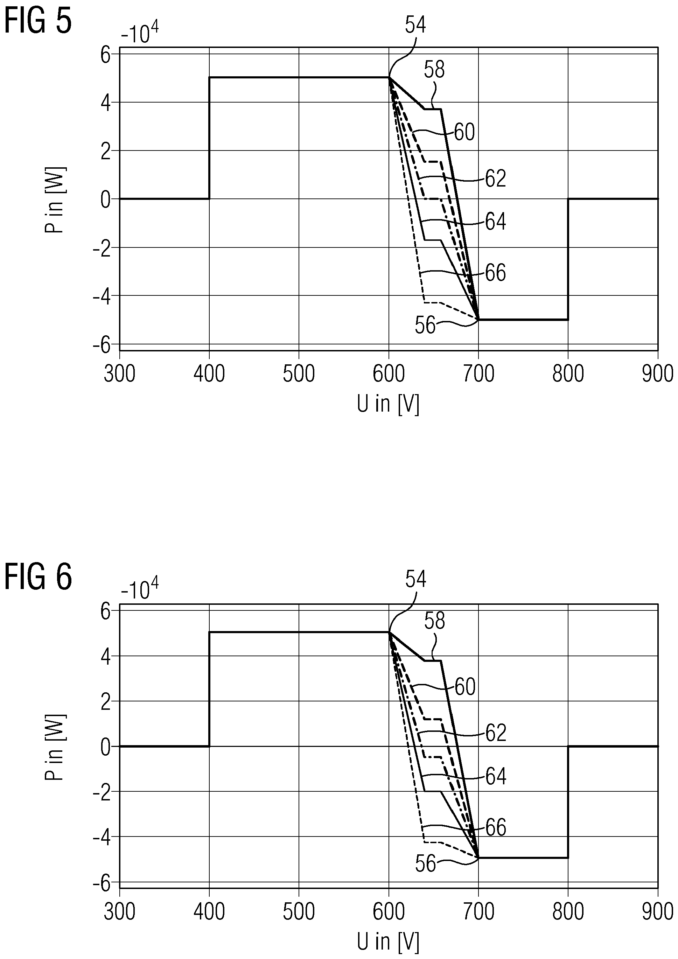

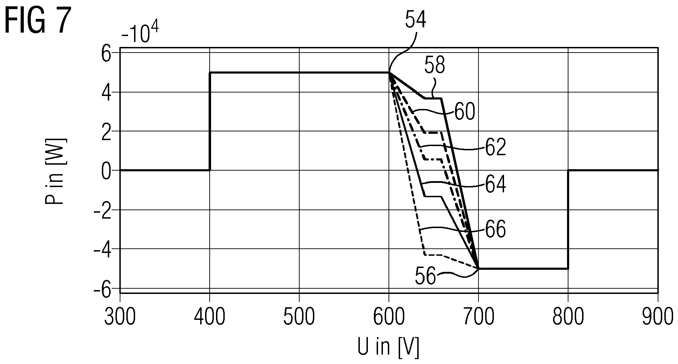

Die FIG 5 bis 7 zeigen unterschiedliche Kennlinienverläufe innerhalb der ersten Netzumrichtereinrichtung 24. In der FIG 5 ist insbesondere ein Kennlinienverlauf bei einem $\Delta P$ von 0 W zu sehen, das heißt wenn die Einspeiseleistung der regenerativen Energieerzeugungseinrichtung gerade die mittlere Verbraucherleistung im Normalbetrieb abdeckt. In der FIG 6 ist ein Kennlinienverlauf bei einem $\Delta P$=-5 kW zu sehen, das heißt wenn mehr Energie eingespeist als verbraucht wird, und in der FIG 7 ist ein Kennlinienverlauf bei einem $\Delta P$ = 7,2 kW zu sehen, wenn also mehr Energie verbraucht wird als zum Beispiel die PV-Anlage zur Verfügung stellt.

Die FIG 5 bis 7 zeigen somit, dass vorgesehen sein kann, dass die erste Netzumrichtereinrichtung 24 mittels der Kennlinie 26 derart gesteuert wird, dass bis zu einem ersten vorgegebenen Spannungsschwellwert 54 innerhalb der Energieverteilereinrichtung 22 die maximale elektrische Leistung der elektrischen Energiespeichereinrichtung 20 für die Energieverteilereinrichtung 22 bereitgestellt wird. Ferner zeigen die FIG 5 bis 7, dass die erste Netzumrichtereinrichtung 24 mittels der Kennlinie 26 derart gesteuert wird, dass oberhalb eines zweiten vorgegebenen Spannungsschwellwertes 56 innerhalb der Energieverteilereinrichtung 22 die elektrische Energiespeichereinrichtung 20 mit der maximalen elektrische Leistung - aus der Energieverteilereinrichtung 22 geladen wird.

Um das entsprechende Verhalten gemäß FIG 4 auf den Normalbetrieb zu beschränken, darf der Ladezustand SOC die Speicherkennlinie aber nur in dem Spannungsbereich beeinflussen, in dem ohne ein aktives Netzsteuerungssystem 12 keine Einspeisung erfolgt, wie in FIG 3 dargestellt, also vorliegend insbesondere zwischen 640 V und 660 V. Bei starken Belastungen, wie im Falle des Punktschweißens $P_{PS}$ müssen sich alle elektrischen Energiespeichereinrichtungen 20, wobei insbesondere eine Vielzahl von elektrischen Energiespeichereinrichtungen 20 innerhalb des dezentralen Versorgungsnetzes 10 angeordnet sein können, unabhängig von ihrem Ladezustand SOC, umgehend an der Aufrechterhaltung des Anlagenbetriebs und damit an der Bereitstellung der Schweißleistung beteiligen. Dies ist insbesondere durch den ersten vorgegebenen Spannungsschwellwert 54 gezeigt.

Die FIG 5 bis 7 zeigen jeweils in ihrer Ausführungsform fünf unterschiedlichen Kennlinien 26 für fünf unterschiedliche Ladezustände SOC. Eine erste Kennlinienform 58 zeigt beispielsweise den Verlauf bei einem Ladezustand von 95%. Eine zweite Kennlinienform 60 ist bei einem Ladezustand SOC von 92%, eine dritte Kennlinienform 62 ist bei einem Ladezustand SOC von 80%, eine vierte Kennlinienform 64 ist bei einem Ladezustand SOC von 23% und eine fünfte Kennlinienform 66 ist bei einem Ladezustand SOC von 20% zu sehen.

Wenn die regenerative Quelle den Verbrauch im Normalbetrieb gerade abdeckt (FIG 5), dann greift die elektrische Energiespeichereinrichtung im mittleren SOC-Bereich (SOC=80%) nicht ein - die Leistung wird auf 0 geregelt. An der Obergrenze des mittleren SOC-Bereiches bei 90% beginnt der linear interpolierte Übergangsbereich. Damit erreicht die Entladeleistung der elektrischen Energiespeichereinrichtung 20 bei 92% gerade 2/5 der maximal möglichen Entladeleistung $P^{max'}$. Das Gleiche passiert mit umgekehrtem Vorzeichen bei 23%. Die maximal möglichen Lade-/Entladeleistung im Normalbetrieb $P^{max}$ / $P^{max'}$ (hier -42.8kW bzw. 37.2kW) werden jeweils bei 20% bzw. bei 95% erreicht. Analog gestalten sich die Verhältnisse bei den beiden anderen $\Delta P$-Werten. Hier wird im mittleren SOC-Bereich stets der Überschuss / das Defizit $\Delta P$ durch die elektrische Energiespeichereinrichtung 20 kompensiert, wobei sich der oben beschriebene 2/5-Wert jetzt jeweils auf den Differenzbetrag zwischen $\Delta P$ und $P^{max}$ / $P^{max'}$ bezieht.

Die maximal möglichen Lade- / Entladeleistungen im Normalbetrieb $P^{max}$ / $P^{max'}$ sind direkt vom Regelverhalten des Netzumrichters abhängig. Wenn der Netzumrichter (wie beim AFE) im üblichen Regelmodus mit konstanter Referenzspannung, das heißt ohne Kennlinie, arbeitet, dann kann er für jedes $V_{dc}$ im Normalbetrieb die volle Nennleistung $P_{NUN}$ liefern. Gemäß der oben aufgeführten Gleichung kann die elektrische Energiespeichereinrichtung 20 dann maximal mit der Leistung

$$P^{max} / P^{max'} = -(\pm P_{NUN} + P_{Last} + P_{RQ})$$

geladen bzw. entladen werden. Beim Einsatz der Kennlinienregelung am AFE ist zu beachten, dass die Busspannung jetzt von der Belastung des Netzumrichters abhängt. Aus der Kennlinie kann die maximal verfügbare Leistung des Netzumrichters bei gegebenem $V_{dc}$ ermittelt und so unter anderem vermieden werden, dass die durch die Lade-/Entladeleistung der elektrischen Energiespeichereinrichtung 20 erzeugte Belastung die Busspannung $V_{dc}$ unter/über die Grenzen des Normalbetriebsbereiches, im Beispiel 640V und 660V, drückt. In einer verfeinerten Variante können die $P^{max}$ / $P^{max'}$ auch jeweils entsprechend des aktuellen Wertes von $P_{RQ}$ nachgeführt werden.

Um die Kennlinie 26 im laufenden Anlagenbetrieb stetig verschieben zu können, müssen $P_{Last}$ und $P_{RQ}$ von einem zentralen Netzmanagement, vorliegend dem Netzsteuerungssystem 12, erfasst und die entsprechenden Werte für $P^{max}$ / $P^{max'}$ und $\Delta P$ an die elektrische Energiespeichereinrichtung 20 als Stellgrößen weitergegeben werden. $P_{RQ}$ ist ähnlich wie die mittlere Verbraucherleistung $P_{Last}$ im Normalbetrieb eine langsam veränderliche Größe, so dass keine sonderlich hohen Anforderungen an die Auflösung der Messung gestellt werden. Ähnliches gilt für die Reaktionszeit der elektrischen Energiespeichereinrichtung 20.

Das oben beschriebene Verfahren regelt das autonome Verhalten der elektrischen Energiespeichereinrichtung 20 in Abhängigkeit von ihrem eigenen Ladezustand SOC. Wenn man darüber hinaus noch erreichen will, dass ein oder mehrere elektrische Energiespeichereinrichtungen 20 in Abhängigkeit vom Ladezustand SOC anderer elektrischer Energiespeichereinrichtungen 20 agieren, dann muss der aktuelle SOC-Wert aller elektrischen Energiespeichereinrichtungen 20 ebenfalls an das Netzmanagement übertragen werden.

Die Methode lässt sich auf mehrere regenerative Quellen i=l...n nach

$$P_{RQ}^{ges} = \sum_{i=1}^{n} P_{RQ}^{i}$$

und auf mehrere elektrische Energiespeichereinrichtungen 20 k=l...m z.B. nach

$$\Delta P_k = \frac{C_k^{nom}}{\sum_{l=1}^{m} C_l^{nom}} \Delta P$$

mit der individuellen Stellgröße $\Delta P_k$ erweitern.

Ein hierin beschriebenes Verfahren kann auch in Form eines Computerprogramm(produkt)s vorliegen, dass das Verfahren auf einer Steuereinheit, insbesondere der elektronischen Recheneinrichtung 14, implementiert, wenn es auf der Steuereinheit ausgeführt wird. Ebenso kann ein elektronisch lesbarer Datenträger (nicht dargestellt) mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in einer Steuereinheit einer MR-Anlage ein beschriebenes Verfahren durchführen.

Alternativ kann vorgeschlagen werden, wenn die installierte Leistung der regenerativen Quellen ausreicht, um unter entsprechenden klimatischen Bedingungen im Jahresmittel mehr Energie zu erzeugen, als für den Betrieb der Anlage und die Auffüllung der Speicher, also der elektrischen Energiespeichereinrichtung 20, erforderlich ist, dann kann man auch während des Punktschweißens auf die Energiezufuhr aus dem übergeordneten Netz 36 verzichten. Der vierte Netzumrichter 38 würde dann nur dazu dienen, überschüssige Energie an das Netz zurück zu speisen. Gegebenenfalls müsste die Leistung der Speicher erhöht oder die Buskapazität aufgestockt werden, um zu verhindern, dass das AFE beim Schweißen in den ungeregelten Zustand verfällt.

Nochmals alternativ kann vorgeschlagen werden, dass zu jedem Zeitpunkt gilt:

$$P_{SP} = -P_{NU} - P_{Last} - P_{RQ} = -P_{NU} + \Delta P$$

Regelt die elektrische Energiespeichereinrichtung 20 im Normalbetrieb, wie oben beschrieben, auf $\Delta P$, dann verschwindet $P_{NU}$ entsprechend. Soll $P_{NU}$ auf einem von 0 verschiedenen Wert $P_{NUfix}$ konstant gehalten werden, muss der Speicher auf:

$$\Delta P' = -P_{NUfix} + \Delta P = -(P_{RQ} + P_{Last} + P_{NUfix})$$

regeln.

Diese Vorgehensweise kann beispielsweise genutzt werden, wenn die regenerativen Energiequellen keine Energie liefern ($P_{RQ}$=0) oder wenn diese für einen bestimmten Zeitraum nicht zur Verfügung stehen. In diesem Fall würde die Regelung auf $\Delta P = - P_{Last}$ die Speicher, also die elektrische Energiespeichereinrichtung 20, im Normalbetrieb solange entladen, bis die untere kritische SOC-Zone erreicht wird. Danach würde der Netzumrichter zum übergeordneten Netz 36 die Speicher schrittweise wieder aus dem Netz aufladen. Das aber würde bedeuten, dass alle zum Betrieb der Anlage nötige Energie letztendlich zuerst aus dem übergeordnetem Netz 36 in die Speicher und von dort an die Verbraucher gebracht wird. Das würde im gesamten Betrieb erhöhte dynamische Wandlungsverluste an allen beteiligten Umrichter erzeugen.

In diesem Fall wäre es effizienter, den Netzumrichter im Normalbetrieb nicht im Leerlauf ($P_{NU}$=0), sondern so zu betreiben, dass er im Mittel gerade die Last kompensiert. Da $P_{Last}$ im Allgemeinen von der Zeit abhängt, würden die Speicher im Normalbetrieb nur die leichten Schwankungen der Last um deren zeitlichen Mittelwert $<P_{Last}>$ ausgleichen. Ansonsten kämen sie ausschließlich während des Punktschweißens und zum Nachladen zum Einsatz. Im Normalbetrieb regelt der Speicher jetzt auf:

$$\Delta P' = -(P_{Last} + P_{NUfix}) = -(P_{Last} - < P_{Last} >)$$

Der Netzumrichter würde entsprechend vergleichsweise dynamik- und damit verlustarm mit konstanter Leistung $P_{NUfix} = - <P_{Last}>$ einspeisen.

Bezugszeichenliste

| | |
|---|---|
| 10 | dezentrales Versorgungsnetz |
| 12 | Netzsteuerungssystem |
| 14 | elektronische Recheneinrichtung |
| 16 | dezentrale Energieerzeugungseinrichtung |
| 18 | elektrischer Verbraucher |
| 20 | elektrische Energiespeichereinrichtung |
| 22 | Energieverteilereinrichtung |
| 24 | erste Netzumrichtereinrichtung |
| 26 | Kennlinie |
| 28 | aktueller Ladezustand |
| 32 | zweite Netzumrichtereinrichtung |
| 34 | dritte Netzumrichtereinrichtung |
| 36 | übergeordnetes Netz |
| 38 | vierte Netzumrichtereinrichtung |
| 40 | Erfassungseinrichtung |
| 42 | Erzeugungseinrichtungskennlinie |
| 44 | Speicherkennlinie |
| 46 | Spannungsbereich |
| 48 | Bereich |
| 50 | erster Übergangsbereich |
| 52 | zweiter Übergangsbereich |
| 54 | erster vorgegebener Spannungsschwellwert |
| 56 | zweiter vorgegebener Spannungsschwellwert |
| 58 | erste Kennlinienform |
| 60 | zweite Kennlinienform |
| 62 | dritte Kennlinienform |
| 64 | vierte Kennlinienform |
| 66 | fünfte Kennlinienform |
| $P_1$ | Verbraucherleistung |
| $P_2$ | Energieerzeugungsleistung |
| $P_3$ | Speicherleistung |
| $P_4$ | öffentliche Netzleistung |
| $P^{max}$ | maximale Leistung |
| SOC | Ladezustand |

SOC$_1$    erster Ladezustand
SOC$_2$    zweiter Ladezustand
SOC$_3$    dritter Ladezustand
SOC$_4$    vierter Ladezustand

**Patentansprüche**

1. Verfahren zum Betreiben eines dezentralen Versorgungsnetzes (10) mittels eines Netzsteuerungssystems (12), bei welchem das dezentrale Versorgungsnetz (10) zumindest mit einer dezentralen Energieerzeugungseinrichtung (16), einem elektrischen Verbraucher (18), einer elektrischen Energiespeichereinrichtung (20) und einer elektrischen Energieverteilereinrichtung (22), an welcher die dezentrale Energieerzeugungseinrichtung (16) und die elektrische Energiespeichereinrichtung (20) und der elektrische Verbraucher (18) elektrisch gekoppelt sind, bereitgestellt wird, wobei zumindest eine erste Netzumrichtereinrichtung (24) der elektrischen Energiespeichereinrichtung (20) in Abhängigkeit von einer Spannung innerhalb der Energieverteilereinrichtung (22) kennliniengesteuert wird, so dass in Abhängigkeit einer spannungsabhängigen Kennlinie (26) elektrische Leistung von der elektrischen Energiespeichereinrichtung (20) für die Energieverteilereinrichtung (22) bereitgestellt wird oder die elektrische Energiespeichereinrichtung (20) mit elektrischer Leistung der Energieverteilereinrichtung (22) geladen wird,
**dadurch gekennzeichnet, dass**
die erste Netzumrichtereinrichtung (24) zusätzlich in Abhängigkeit von einem aktuellen Ladezustand (SOC) der elektrischen Energiespeichereinrichtung (20) kennliniengesteuert wird, so dass zusätzlich ladezustandsabhängig elektrische Leistung von der elektrischen Energiespeichereinrichtung (20) für die Energieverteilereinrichtung (22) bereitgestellt wird oder die elektrische Energiespeichereinrichtung (20) mit elektrischer Leistung der Energieverteilereinrichtung (22) geladen wird.

2. Verfahren nach Anspruch 1, **dadurch gekennzeichnet, dass** die Energieverteilereinrichtung (22) derart bereitgestellt wird, dass diese zusätzlich mit einem übergeordneten Netz (36) gekoppelt ist und zum Empfangen von elektrischer Leistung aus dem übergeordneten Netz (36) ausgebildet ist.

3. Verfahren nach Anspruch 1 oder 2, **dadurch gekennzeichnet, dass** die Energieverteilereinrichtung (22) derart bereitgestellt wird, dass diese zusätzlich mit einem übergeordneten Netz (36) gekoppelt ist und zum Übertragen von elektrischer Leistung aus der Energieverteilereinrichtung (22) in das übergeordnete Netz (36) ausgebildet ist.

4. Verfahren nach einem der vorhergehenden Ansprüche, **dadurch gekennzeichnet, dass** die erste Netzumrichtereinrichtung (24) mittels der Kennlinie (26) derart gesteuert wird, dass bei einem ersten vorgegebenen Spannungsschwellwert (54) innerhalb der Energieverteilereinrichtung (22) eine maximal mögliche elektrische Leistung der elektrischen Energiespeichereinrichtung (20) für die Energieverteilereinrichtung (22) bereitgestellt wird.

5. Verfahren nach einem der vorhergehenden Ansprüche, **dadurch gekennzeichnet, dass** die erste Netzumrichtereinrichtung (24) mittels der Kennlinie (26) derart gesteuert wird, dass bei einem zweiten vorgegebenen Spannungsschwellwert (56) innerhalb der Energieverteilereinrichtung (22) die elektrische Energiespeichereinrichtung (20) mit einer maximal möglichen elektrischen Leistung aus der Energieverteilereinrichtung (22) geladen wird.

6. Verfahren nach einem der vorhergehenden Ansprüche, **dadurch gekennzeichnet, dass** die erste Netzumrichtereinrichtung (24) mittels der Kennlinie (26) derart gesteuert wird, dass innerhalb eines vorgegebenen Spannungsbereichs (46) innerhalb der Energieverteilereinrichtung (22) keine elektrische Leistung zwischen der elektrischen Energiespeichereinrichtung (20) und der Energieverteilereinrichtung (22) ausgetauscht wird, insbesondere wenn die Einspeiseleistung der regenerativen Energieerzeugungsquelle gerade den Verbrauch im Normalbetrieb abdeckt.

7. Verfahren nach einem der vorhergehenden Ansprüche, **dadurch gekennzeichnet, dass** die erste Netzumrichtereinrichtung (24) mittels der Kennlinie (26) derart gesteuert wird, dass unterhalb eines ersten vorgegebenen Ladezustands (SOC$_1$) der elektrischen Energiespeichereinrichtung (20) die elektrische Energiespeichereinrichtung (20) mit einer maximal möglichen elektrischen Leistung von der Energieverteilereinrichtung (22) geladen wird.

8. Verfahren nach einem der vorhergehenden Ansprüche, **dadurch gekennzeichnet, dass** die erste Netzumrichtereinrichtung (24) mittels der Kennlinie (26) derart gesteuert wird, dass oberhalb eines zweiten vorgegebenen Ladezustands (SOC$_2$) der elektrischen Energiespeichereinrichtung (20) eine maximal mögliche elektrische Leistung von der elektrischen Energiespeichereinrichtung (20) für die Energieverteilereinrichtung (22) bereitgestellt wird.

9. Verfahren nach einem der vorhergehenden Ansprüche, **dadurch gekennzeichnet, dass** die erste Netzumrichtereinrichtung (24) mittels der Kennlinie (26) derart gesteuert wird, dass zwischen einem dritten vorgegebenen Ladezustand ($SOC_3$) der elektrischen Energiespeichereinrichtung (20) und einem vierten vorgegebenen Ladezustand ($SOC_4$) der elektrischen Energiespeichereinrichtung (20) die elektrische Energiespeichereinrichtung (20) in Abhängigkeit von einer elektrischen Energiebereitstellung der dezentralen Energieerzeugungseinrichtung (16) die elektrische Leistung bereitstellt oder mit der elektrischen Leistung geladen wird.

10. Verfahren nach einem der vorhergehenden Ansprüche, **dadurch gekennzeichnet, dass** die erste Netzumrichtereinrichtung (24) mittels der Kennlinie (26) derart gesteuert wird, dass eine bereitgestellte elektrische Leistung durch die dezentrale Energieerzeugungseinrichtung (16) bei der Bereitstellung der elektrischen Leistung durch die elektrische Energiespeichereinrichtung (20) berücksichtigt wird.

11. Verfahren nach einem der vorhergehenden Ansprüche, **dadurch gekennzeichnet, dass** das Netzsteuerungssystem (12) mit zumindest einer Erfassungseinrichtung (40) zum Erfassen von zumindest einer benötigten elektrischen Leistung des elektrischen Verbrauchers (18) und/oder zum Erfassen einer bereitgestellten elektrischen Leistung der dezentralen Energieerzeugungseinrichtung (16) bereitgestellt wird.

12. Verfahren nach einem der vorhergehenden Ansprüche, **dadurch gekennzeichnet, dass** als Energieerzeugungseinrichtung (16) eine regenerative Energiequelle bereitgestellt wird.

13. Netzsteuerungssystem (12) für ein dezentrales Versorgungsnetz (10), mit zumindest einer elektronischen Recheneinrichtung (14), wobei das Netzsteuerungssystem (12) zum Durchführen eines Verfahrens nach einem der Ansprüche 1 bis 12 ausgebildet ist.

14. Computerprogramm, welches direkt in einen Speicher einer elektronischen Recheneinrichtung (14) einer Magnetresonanzanlage ladbar ist, mit Programm-Mitteln, um die Schritte des Verfahrens nach einem der Ansprüche 1 bis 12 auszuführen, wenn das Programm in der elektronischen Recheneinrichtung (14) der Magnetresonanzanlage ausgeführt wird.

15. Elektronisch lesbarer Datenträger mit darauf gespeicherten elektronisch lesbaren Steuerinformationen, welche zumindest ein Computerprogramm nach Anspruch 14 umfassen und derart ausgestaltet sind, dass sie bei Verwendung des Datenträgers in einer elektronischen Recheneinrichtung (14) einer Magnetresonanzanlage ein Verfahren nach einem der Ansprüche 1 bis 12 durchführen.

FIG 1

FIG 2

FIG 3

FIG 4

FIG 5

FIG 6

FIG 7

**Europäisches Patentamt**
**European Patent Office**
**Office européen des brevets**

# EUROPÄISCHER RECHERCHENBERICHT

**Nummer der Anmeldung**

EP 19 19 6974

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/361859 A1 (YOKO RYOSUKE [JP] ET AL) 20. Dezember 2018 (2018-12-20) * Absätze [0032] - [0059]; Abbildungen 1, 2 * ----- | 1-15 | INV. H02J3/32 H02J3/38 H02J3/48 H02J7/00 |
| X | US 2010/181837 A1 (SEEKER STEVEN [US] ET AL) 22. Juli 2010 (2010-07-22) * Absätze [0038] - [0044]; Abbildungen 2, 7, 8 * ----- | 1-15 | H02J7/34 H02J9/00 A61B5/05 |
| A | US 9 559 521 B1 (KING ROBERT DEAN [US]) 31. Januar 2017 (2017-01-31) * Spalte 8, Zeile 13 - Spalte 8, Zeile 65; Abbildung 4 * ----- | 1-15 | |

**RECHERCHIERTE SACHGEBIETE (IPC)**

H02J
A61B

Der vorliegende Recherchenbericht wurde für alle Patentansprüche erstellt

| Recherchenort | Abschlußdatum der Recherche | Prüfer |
|---|---|---|
| München | 13. Januar 2020 | Telega, Pawel |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 19 6974

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-01-2020

| Im Recherchenbericht angeführtes Patentdokument | Datum der Veröffentlichung | Mitglied(er) der Patentfamilie | Datum der Veröffentlichung |
|---|---|---|---|
| US 2018361859 A1 | 20-12-2018 | CN 105556796 A | 04-05-2016 |
| | | EP 3029804 A1 | 08-06-2016 |
| | | EP 3528362 A1 | 21-08-2019 |
| | | JP 6085544 B2 | 22-02-2017 |
| | | JP 6459085 B2 | 30-01-2019 |
| | | JP 2015061439 A | 30-03-2015 |
| | | JP 2017085888 A | 18-05-2017 |
| | | SG 11201601643T A | 28-04-2016 |
| | | US 2016214491 A1 | 28-07-2016 |
| | | US 2018361859 A1 | 20-12-2018 |
| | | WO 2015041253 A1 | 26-03-2015 |
| US 2010181837 A1 | 22-07-2010 | AU 2009337086 A1 | 28-07-2011 |
| | | BR PI0919982 A2 | 17-10-2017 |
| | | CA 2748947 A1 | 22-07-2010 |
| | | CN 102308452 A | 04-01-2012 |
| | | DK 2387815 T3 | 07-09-2015 |
| | | EP 2387815 A2 | 23-11-2011 |
| | | ES 2547272 T3 | 05-10-2015 |
| | | HK 1164558 A1 | 18-03-2016 |
| | | KR 20110111483 A | 11-10-2011 |
| | | US 2010181837 A1 | 22-07-2010 |
| | | WO 2010082981 A2 | 22-07-2010 |
| | | ZA 201105706 B | 25-04-2012 |
| US 9559521 B1 | 31-01-2017 | AU 2016368287 A1 | 28-06-2018 |
| | | EP 3387730 A1 | 17-10-2018 |
| | | US 9559521 B1 | 31-01-2017 |
| | | US 2017168516 A1 | 15-06-2017 |
| | | WO 2017100234 A1 | 15-06-2017 |

EPO FORM P0461

Für nähere Einzelheiten zu diesem Anhang : siehe Amtsblatt des Europäischen Patentamts, Nr.12/82